# EUROPEAN PATENT APPLICATION

(11) **EP 3 079 283 A1**
(43) Date of publication of application: **12.10.2016**
(21) Application number: 16164720.1
(22) Date of filing: 22.01.2014
(51) Int. Cl.: H04H 20/18, H04H 60/06, H04H 60/37, H04H 60/58, H04H 60/33, H04H 60/85, H04H 20/38, H04H 20/31

(54) **AUDIO BROADCASTING CONTENT SYNCHRONIZATION SYSTEM**

(62) Divisional of application: 14000224.7
(71) Applicant: Radioscreen GmbH, 22765 Hamburg (DE)
(72) Inventor: Nehls, Thoralf, 21266 Jesteburg (DE); Hirschfeld, Matthias, 12107 Berlin (DE); Bunsmann, Ulrich, 22147 Hamburg (DE)
(74) Representative: Grünecker Patent- und Rechtsanwälte PartG mbB

(57) **Abstract**

The present disclosure relates to methods, techniques and systems for dynamically synchronizing complementary broadcasting content for supplementing audio broadcasting with audio context sensitively synchronized complementary broadcasting content items. An audio broadcasting content, e.g. a radio broadcast by a radio station is supplemented by complementary broadcasting content, e.g. still or moving images such that the transmission and playback of the complementary broadcasting content (e.g. a video) is synchronized with a current audio broadcasting (e.g. a piece of music) by dynamically taking into account the audio context of a user listening to the current audio broadcasting.

## Description

### TECHNICAL FIELD

The present disclosure relates to methods, techniques and systems for dynamically synchronizing complementary broadcasting content for supplementing audio broadcasting with audio context sensitively synchronized complementary broadcasting content items.

### BACKGROUND

Audio content is traditionally broadcasted via radio stations by radio frequency transmission over the air to radio receivers. However, in the course of digitalization of consumer electronics, more and more radio receivers and end devices have been subject to technological change. Thus, typical radio terminals today provide additional options for entertainment going beyond the mere receiving of a radio broadcast.

Such further entertainment options may relate to the playback of further sources of audio (CD, mp3, internet radio, streaming services ...) and/or video content (DVD, YouTube, internet video ...) as well as providing access to internet-based content sources (eBooks, audio / video streams ...). Thus, radio receiver terminals are more and more equipped not only with facilities to play back digital audio & video media, but also with facilities to play back and display non-audio content like, for example, web pages and / or videos. For this purpose, these radio terminals are equipped with digital displays which may however not be used when operating in a "simple" radio and / or audio broadcast mode. As the radio broadcast typically provides only audio content, any display facility of a radio terminal may remain just dark (i.e. unused) or may just feature a static display of information, such as a list of available radio stations, static information on the radio station to which the device is currently tuned, and the like.

This may be interpreted as an opportunity for enriching radio broadcasting content and the prior art has addressed this issue, for example with the digital radio application RadioVIS. Here, as part of a radio broadcasting stream according to the digital radio format DAB+, static pictures are broadcasted in parallel to the audio broadcast provided by a radio station. Accordingly, the static picture transmitted in parallel to the radio broadcast is displayed on the digital display of a corresponding DAB+ radio terminal. However, while this feature was introduced in order to increase the quality of digital radio broadcasting, the RadioVIS application has not found a wide reception, as the additional value of the simultaneously transmitted static pictures has been regarded as rather small.

In addition, a phone-based system for advertisement delivery by identifying broadcast audio advertisements is known from US 2008/0066098 A1. According to this prior art, a user listening to a radio broadcast creates an audio sample of a current broadcast as it is received, transmits the sample to the computer-implemented, targeted advertisement delivery system, and here the audio sample is identified and used to obtain targeted advertising information which is in turn transmitted to and received by the user who has previously tuned in to the respective broadcasting source. However, this state of the art, rather than supplementing the audio content of a radio broadcast with simultaneously transmitted advertisement, provides advertisements which are not in sync with the current audio broadcast.

Based on the deficiencies of the state of the art, there is thus a need for improved methods and systems to provide complementary broadcasting content for supplementing audio broadcasting of a radio station.

This object is solved by the subject matter of the independent claims. Preferred embodiments are defined by the dependent claims.

### SUMMARY OF THE INVENTION

In the following a summary is provided to introduce a selection of representative concepts in a simplified form that are further described below in the detailed description. This summary is not intended to identify key features or essential features of the claimed subject matter, nor is it intended to be used in any way that would limit the scope of the appended claims.

Briefly, various aspects of the subject matter described herein are directed towards a technology by which an audio broadcasting content, e.g. a radio broadcast by a radio station is supplemented by complementary broadcasting content, e.g. still or moving images such that the transmission and playback of the complementary broadcasting content (e.g. a video) is synchronized with a current audio broadcasting (e.g. a piece of music) by dynamically taking into account the audio context of a user listening to the current audio broadcasting. In an aspect of the present invention the current audio context of a user may be built from considering a piece of current audio broadcasting content (e.g. a piece of music), characteristics of a profile of the broadcasting source currently being listened to by the user (e.g. image characteristics, media plan 152, ...), characteristics of the individual user and / or the user's individual profile (e.g. as retrieved from analyzing internet footprint, social media channel information, user activity history, a user's geo-/GPS-location and the like), date, time of day and /or further, i.e. alternative and / or additional information.

For that, in example implementations, a user profile is provided that comprises characteristics of a user that tunes to a radio station in order to receive audio broadcast content on a radio receiver terminal such as, for example, an electronic or a mobile electronic device. The mobile electronic device may be a mobile telephone, a mobile radio device or a mobile music player, or any other electronic device being enabled to receive and playback audio broadcasting content. Moreover, in example implementations, the audio broadcasting content may be received via over-the-air radio frequency transmission or may be received as a digital stream using web-based radio broadcast transmission techniques and / or any other digital or analog transmission and / or networking technique.

In example implementations, the transmitted audio broadcasting content is received on a mobile device and rendered in sequence to the user via the mobile device. In example implementations, this rendering may be performed by playing back the audio broadcasting content. The audio broadcasting content may be provided and received as a sequence of tracks with a track representing a piece or sequence of audio broadcasting content such as, for example, a song, a piece of editorial content, a news item, a radio spot or the like. Based on the received sequence of audio broadcasting content, in example implementations, an audio broadcasting context is calculated by taking into account at least one of the current sequence of broadcasting content, e.g. the current track's profile and/or characteristics of the user of the mobile device and/or the profile and/or characteristics of the radio station broadcasting the current radio track...), and / or characteristics of the user's profile (e.g. as retrieved from analyzing internet footprint, social media channel information, user history and the like), date, time of day and / or further, i.e. alternative and / or additional information.

In example implementations, this calculating or determining comprises dynamically calculating, while rendering a current audio broadcasting content, combinatory hashing on samples of the currently rendered audio track to determine an audio track identifier and identifying the determined audio track identifier in a hash look-up table at the mobile or a server entity to identify match the currently rendered audio track with an audio spot stored with ist respective audio track identifier in one or more spot catalogs 186. In example implementations, the look-up table of the spot catalog 186 - provided at the mobile device or a central server unit -is searched for an audio identifier that matches the audio identifier calculated for the currently rendered audio track.

Based on the matching audio identifier found in the hash look-up table, the currently rendered audio track is identified with the respective complementary broadcasting content, i.e. the complementary content items associated thereto. In order to select one of the one or more complementary content items associated to the identified audio track, the current audio context of the user listening to the currently rendered audio track is derived taking into account the identified audio track, the characteristics of the user and/or the characteristics of the radio station currently tuned to, the characteristics of the radio program currently broadcasted and the like. The determined audio context allows for dynamically matching a targeted complementary content item that best relates to the features of the present audio context of the individual user listening to the present broadcasting content. The dynamically matched complementary content item may be requested from the mobile device and retrieved from respective data bases and transmitted to the mobile device. At the mobile device, an application is prepared for replaying the audio broadcasting content in-synch with the matched complementary broadcasting content in a seamlessly blended fashion to create an audio-visually synchronized experience for the user.

In example implementations, the audio broadcasting content is broadcasted as digital stream of audio from a broadcasting source, e.g. a radio station. In one aspect of the present invention, this digital audio stream is also provided to a complementary content provider with a sufficient time-offset before the broadcasting such that the complementary content provider can analyze the to-be-broadcasted audio broadcasting content to create a spot catalog 186 that lists the tracks of the to-be-broadcasted audio broadcasting content with their respective audio identifier calculated on the bases of combinatory hashing.

In example implementations, each of the tracks in the spot catalog 186 is associated with one or more complementary broadcasting content items that may match various audio contexts of different individual users at various points in times and / or locations before the broadcasting of the respective audio broadcasting content to these users. Further aspects relate to determining an audio context on the basis of a weighted consideration of at least one of a characteristic of the currently rendered audio track, information retrieved from a user's profile, characteristics of a user's history of activity, features of a user's current geo-context like e.g. the user's GPS-position, information retrieved from a broadcasting source's profile, a current radio program characteristic, a current day and / or time. Determining an individual audio context of a current user maybe performed by an application service of a second screen synchronization system or maybe performed additionally or alternatively by an application processing on an end device that holds a user's profile, characteristics of a user's history of activity, features of a user's current geo-context and the like without exchanging this data with an application service outside of the control of the user operating the end device to account for privacy and data protection considerations. Additional aspects relate to building a hash look-up table from calculating a combinatory hashes from tracks of provided audio broadcasting content, wherein calculating the hash combinatory hashes comprises creating a constellation of volume peaks with time/frequency coordinates, applying combinatory hashing to the list of time/frequency peak coordinates, storing the result in a look-up table indexed by the respective hash value of frequency.

In some implementations, each entry of the look-up table has associated thereto one or more matching complementary content items stored in one or more databases. In aspect of the present invention, a complementary content item may be a visual content, an image, a movie, a video, like e.g. a visual advertisement complementing an audio broadcast and / or application functionality to be rendered at user device. In some implementations, a complementary content item is provided as application functionality, the complementary content item being transmitted to the device and rendered on the device to enable the user to engage in interactive activities, the interactive activities being at least one of voting, commenting, buying, and / or recording a personal message and sending the personal message to the broadcasting source.

In further aspects, a computer-readable medium is provided that has thereon computer-readable instructions that, when run on a computer, are configured for performing the steps of any of the above described methods. In addition, a computer-implemented system is provided for performing dynamic audio-context-sensitive synchronisation of complementary broadcasting content for supplementing audio broadcasting. In some implementations, the system may comprise one or more databases storing one or more user profiles, each profile comprising characteristics of one of a plurality of users receiving audio broadcast content. The system may further comprise one or more mobile devices operated by the one of the plurality of users, the mobile device being adapted for receiving an audio broadcasting content from one of a plurality of audio content broadcasting sources and the mobile device further being adapted for rendering the received audio broadcasting content in sequence to the one user. The system may further comprise a second screen device application being connected to a second screen synchronization system, the application comprising means adapted for determining, while rendering the received audio broadcasting content, an audio broadcasting context based on considering a currently rendered sequence of the received audio broadcasting content, characteristics of the user profile, and characteristics of the one audio content broadcasting source, wherein the determining comprises dynamically calculating while rendering the received audio broadcasting content a hash function on the currently rendered sequence and / or dynamically recognizing a unique audio content identifier in the currently rendered sequence; and the second screen synchronization system being adapted for selecting based on the determined audio broadcasting context a dynamically matching complementary broadcasting content, retrieving the matched complementary broadcasting content from the one or more databases and broadcasting the matched complementary broadcasting content to the mobile device; wherein the application is further adapted for receiving and rendering the matched complementary broadcasting content on the mobile device in parallel to the rendering of the received audio broadcasting content such that the complementary broadcasting content is dynamically synchronized to the determined audio context.

This, in example implementations, allows for the receiving and rendering of the matched complementary broadcasting content on the mobile device in parallel to the rendering of the current audio broadcasting track such that the complementary broadcasting content is dynamically synchronized to the current audio context of the user.

As a result, a computer-implemented system for providing dynamic audio-context-sensitive synchronization of complementary broadcasting content is provided that allows for the supplementation of audio broadcasting content broadcasted by a radio station with complementary broadcasting content such that both the audio broadcasting content and the complementary broadcasting content can be dynamically synchronized and rendered in a synchronized and blended fashion on a mobile device.

Other advantages may become apparent from the following detailed description when taken in conjunction with the drawings.

### BRIEF DESCRIPTION OF THE DRAWINGS

Figure 1 schematically shows a second screen synchronization system for supplementing audio broadcasting content.
Figure 2 illustrates an example of a three-dimensional audio track analysis for determining (time/frequency/volume)-triples from a time-based frequency-volume characteristic of broadcasted audio content.
Figure 3 schematically illustrates a mobile computing device with a client-side application operating with examples of user interfaces for supplementing audio broadcasting content.
Figure 4 schematically shows an example sequence of dynamic audio-context-sensitive synchronization of complementary broadcasting content for supplementing audio broadcasting.

### DETAILED DESCRIPTION

Embodiments described herein provide computer and network-based methods, techniques and systems for dynamically synchronizing complementary broadcasting content for supplementing audio broadcasting in an audio context sensitive fashion.

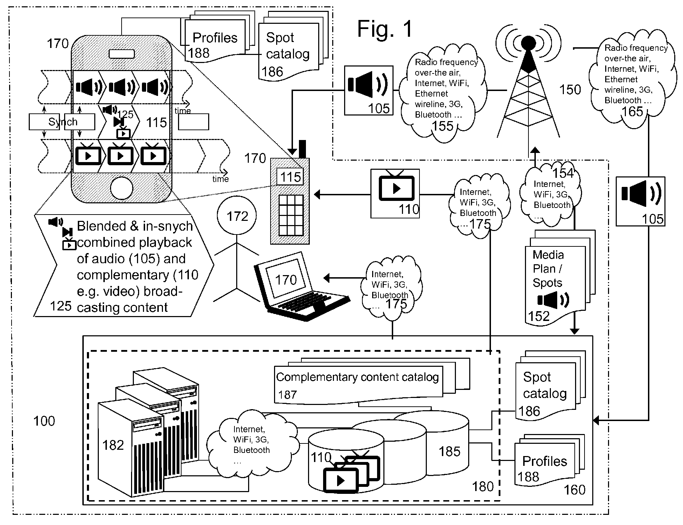

Figure 1 shows a second screen system 100 for supplementing audio broadcasting content 105 broadcasted (e.g. audio radio broadcast like music, news ...) by broadcasting source 150 (e.g. a radio station) with complementary content 110 (e.g. visual content like a video, still picture ...) provided by complementary content provider 160. Application 115 on devices 170 integrates both streams, audio stream 105 from broadcasting source 150 and visual stream 110 from complementary content provider 160, in-synch such that a blended and in-snych combined playback 125 of audio content 105 and complementary video content 110 is presented to the user at end device 170.

As illustrated in Figure 1, in an exemplary implementation, device 170 may be a mobile device, a laptop or any other radio broadcast receiver device. Devices 170 may operate to integrate audio broadcast content 105 and complementary content 110 into an in-synch blended content rendering 125 that replays audio broadcasting content 105 in a synchronized fashion together with the complementary content 110. The blended in-synch replay 125 provides the user 172 with a second screen, i.e. an additional screen for e.g. visual content 110 that supplements the currently replayed audio content 105 broadcasted by and received form e.g. a radio station.

As indicated in Figure 100, mobile device 170 may be a mobile phone, but may also be a mobile computing device and/or a mobile radio terminal or may in this or in alternative implementations be any other mobile or stationary device enabled to receive and replay audio content 105 and complementary content 110. Moreover, while in Figure 1, one broadcasting source 150 is indicated as source of the audio broadcasting content 105 (e.g. a radio station), in some implementations more than one, two or three, or any other suitable number of broadcasting sources 150 may be applicable. Broadcasting sources 150 may for example be a radio station or a TV station or may be, for example, an audio background source in a shopping center or any other public or private place that is provided with a music or any other audio broadcasting program 105.

As indicated in Figure 1, audio broadcasting content 105 is broadcasted by broadcasting source 150 over a network 155. This broadcasting network may be a traditional over-the-air radio frequency network, a wireless or wireline digital or analog network, may work along the standards of the internet protocol or may be using any other suitable network protocol. Thus, device 170 receives broadcasting content 105 over a wireless or wireline network by a radio frequency or TCP/IP connection or similar or alternative transmission medium or network from broadcasting source 150. In some implementations, device 170 may operate an application 115 as part of the second screen system 100 that allows for rendering, i.e. replaying a digitally-received, i.e. streamed broadcasting content 105. Device 170 may further be operable to replay a broadcasting content 105 received via radio frequency over-the-air transmission or maybe additionally or alternatively be prepared for receiving and rendering, i.e. replaying audio broadcasting content 105 received by a network 155 as sent out by broadcasting source 150.

Moreover, broadcasting content 105 is similarly transmitted via network 165 to complementary content provider 160. This transmission of broadcasting content 105 (that is to-be-transmitted to end devices 170) to complementary content provider 160 may be performed before the audio broadcasting content is actually transmitted to the end devices 170 and / or maybe transmitted to complementary content provider 160 in parallel to the transmission to the end devices 170. Thus, the transmission of content 105 to complementary content provider 160 may be performed by broadcasting source 150 with time-offset or without time offset. Similarly, network 165 used for the transmission to the complementary content provider 160 maybe the same network as network 155 for the transmission to the end devices 170 or maybe a distinct network 165 for the transmission of content 105 to complementary content provider 160. Network 165 may be a traditional radio-frequency over-the-air network or maybe a wired or wireless network may work according to TCP/IP protocol or any other suitable network protocol and / or transmission technique that allows complementary content provider 160 to receive audio broadcasting content 105 from broadcasting source 150.

As indicated in Figure 1, complementary content provider 160 operates a second screen synchronization system 180 that operates to synchronize complementary content 110 with audio broadcasting content 105.

In example implementations, complementary content provider operates and / or uses network 175 to transmit complementary content 110, e.g. visual complementary content items 110 like for example visual advertisements to end device 170 operated by user 172. Network 175 may, similar as network 155 and / or network 165, also be a traditional over-the-air radio frequency network that may also be implemented as a wired or wireless network or operating along the TCP/IP standard or similar or alternative network techniques that can be accessed by second screen synchronization system 180 to broadcast synchronized complementary content 110 in-sync with audio broadcasting content 105 to end device 170 such that is rendered at device 170 in-sync 125 by application 115. Moreover, in example implementations, network 175 may also be enabled to transmit user activity, user data, user input, GPS location and the like as detected by end devices 170 back to complementary content provider 160 for purposes of further computing and processing.

In example implementations, second screen synchronization system 180 is built from one or more networked or stand-alone computer systems 182 that have access to a plurality of data storages and / or databases 185. The number and nature of computer systems 182 in Figure 1 however, as well as the number and nature of data storages 185 only serve for exemplary and illustrative purposes. Thus, in further implementations of second screen system 100, an alternative, in particular higher or lower number of computer systems 182 as well as alternative numbers and natures of data storage systems 185 may be implemented. More particularly, computers 182 as well as data storages 185 may be implemented as cloud services, remote server implementations, data centers or the like. Thus, computers 182 and data storages 185 may or may not be sited within one and the same logical or physical domain. Instead, they may also be implemented in a distributed fashion.

Second screen synchronization system 180 stores complementary content items 110 in data storages 185. Such complementary content 110 may for example be visual content like, for example, videos or movies and / or pictures. In addition, or alternatively, complementary content 110 may be represented by applications, or interactive functionalities implementing actions of voting, buying, and / or rating by a user 172. Thus, in some implementations, complementary content 110 may have a one-way characteristic. Here, similar to audio broadcasting content 105, complementary visual content 110 is broadcasted from complementary content provider 160 via network 175 to device 170 such that the complementary visual content 110 is rendered on device 170 in-sync 125 with audio broadcast content 105. In some implementations, visual complementary content 110 may comprise visual advertisements, advertising videos, or may contain other forms of advertising information that complements the currently rendered audio content 105 in a context-sensitive way to individually target the audio context of the user 172. For example, broadcasting source 150 may currently broadcast a song 105 from a particular artist like e.g. Michael Jackson. Second screen system 100 may in this situation identify the song 105 being rendered at end device 170 and derive from its context advertising of a biographical book of that artist as a suitable matching complementary content 110. This advertisement 110 is visually rendered in-synch and blended with the audio playback of the currently broadcasted song 105 from the same artist.

However, in some implementations, complementary broadcasting content 110 may also be rendered as an application by device 170 in-sync 125 with audio broadcast 105 such that a user 172 when listening to audio broadcasting content 105 at device 170 is enabled by the rendering of complementary broadcasting content 110 through application 115 to engage in interactive activities like, for example, buying music that is currently played with audio broadcasting content 105 (in the above example of replaying a song of a particular artist the user may be offered with an option to directly engage in buying / downloading the song of that artist) and/or voting on a singer or song and/or a rating on a program or a radio station. However, rating, voting or buying just serve as illustrative examples of interactive application functionalities provided by complementary content 110 when rendered via application 115 on a device 170. Further and in particular, additional and alternative applications may also be implemented, some of which will be described further below in more detail.

Thus, as indicated in Figure 1, in example implementations basically four technical systems work together to build second screen system 100 for synchronizing additional complementary content 110, for example visual content 110, via mobile application 115 operating on end device 170 such that the application 115 may replay the complementary visual content 110 seamlessly blended and in-synch 125 with an audio broadcasting content 105 broadcasted by a broadcasting source 150, e.g. a radio station 150 that is beyond second screen system 100.

Firstly, also remote from second screen system 100, Figure 1 depicts a broadcasting source 150, for example a radio station 150, as the source for audio content 105. Broadcasting source 150 generates a broadcasting audio content 105, for example an audio broadcasting program that is built from sequences, i.e. tracks or rather spot of music, editorial content, news and the like. In some implementations, such radio program structure of broadcasting audio content 105 may be documented using tools like a media plan 152 to plan the sequence of content items, i.e. tracks, spot, advertisements and the like.

In example implementations, the outcome of such pre-planning, the plan of to-be broadcasted spots of broadcasting stream 105 and the respective spot / tracks 105 may be provided via data link 154 to complementary content provider 160. Using content synchronization system 180, complementary content provider 160 creates in this pre-broadcasting phase an individual acoustic fingerprint as a unique identifier for each of the to-be broadcasted spots or tracks of music songs, pieces of editorial content, news items, advertisements and the like. In example implementations, for each of these spots or tracks representing an audio file, reproducible hash tokens are extracted as unique identifier. Using these identifiers, a radio spot catalog 186 is built by complementary content provider 160 and stored in databases 185 which comprise an indexed list of the reproducible hash tokens for searching and identifying a track or spot of audio broadcasting content 105. In some implementations, the contents (i.e. the radio spot & tracks) contained in the radio spot catalog 186 may be specific for a particular broadcasting source 150 and one particular media plan 152, in some implementations the spot catalog 186 may alternatively or additionally contain data generated from a generalized set of spot / tracks like for example very popular music songs, classic music and the like.

Secondly, in the broadcasting phase this radio program 105 as planned and documented in a media plan 152 may be transmitted by broadcasting source 150 as audio broadcasting content 105 and received by end devices 170 for playback via network 155 for example, as a radio frequency over-the-air transmission 155 or may additionally or alternatively be transformed into a digital streaming service using coding means like, for example, AAC or AAC+ coding and the like in order to use digital networks 155, for example using wired or wireless networks 155 according to TCP/IP standards or other suitable digital network means. In some implementations, broadcasting source 150 may use digital streaming services for transforming audio broadcasting content 105 using digital conversion and coding techniques following standards like AAC, AAC+, AAC+ Version 2 and the like. Such a codified and digitally converted audio content 105 may be a digitally transmitted to end device 170 using any digital network transmission means 155 like, for example, wireless or wireline internet connections. Alternatively or additionally broadcasting source 150 may use an analogue radio frequency signal transmitted over the air 155 to a radio receiver 170.

Thirdly, in some implementations, this audio broadcasting 105 provided by broadcasting source 150 is in parallel or with a suitable time offset to the receiving at the mobile device 170 also received at complementary content provider 160. The complementary content provider 160 may receive an analog over-the-air radio frequency transmission 165 of audio content items 105 or may alternatively or additionally receive audio content items 105 via digital streaming service over digital wireless or wired networks 165, for example the internet. This stream received at a complementary content provider 160 is computed in second screen synchronization system 180 to synchronize transmission and playback of complementary content items 110 stored in databases 185 with transmission and playback of audio broadcasting content 105 at end devices 170.

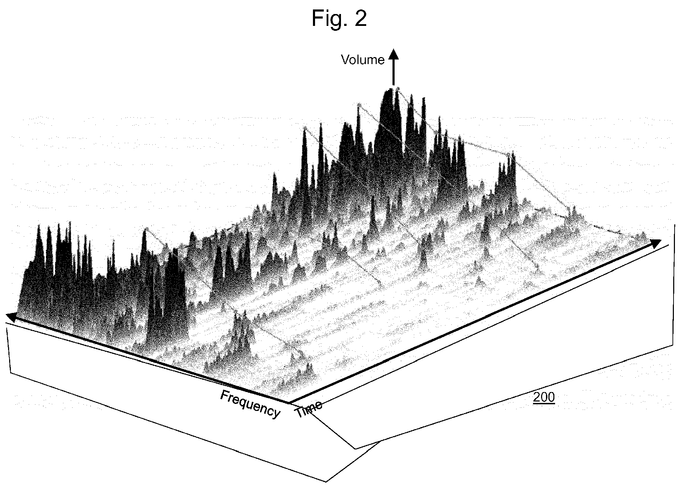

In example implementations, data storages 185 may not be configured as local and / or physical part of second screen synchronization system 180 but may alternatively or additionally be configured as remote storage systems 185, cloud services 185 and the like. In these example implementations, complementary content 110 may thus not be locally stored in data storages 185 but may rather be stored in remote storage systems 185 that may be remote from second screen synchronization system 180 but accessible by complementary content provider 160 and / or end device 170. In these example implementations, local storage systems 185 connected with second screen synchronization system 180 may store (only) only the unique identifier for each spots or tracks of complementary content 110. Thus, in these example implementations, complementary content items 110 may alternatively or additionally be stored in remote data storages 185 of a content providing system (not shown in Figure 2) which might not be part of second screen synchronization system 180.

In order to perform this synchronization, in a pre-broadcasting phase complementary content provider 160 has built one or more spot catalogs 186 for identifying broadcasted audio content items 105 via matching pair search. Moreover, complementary content provider 160 has identified and associated to each audio spot or track 105 in spot catalog 186 one or more complementary content item 110, e.g. a video, a still image, an advertisement and the like. In the later broadcasting phase, the received and played back digital stream or analog radio frequency signal of audio broadcasting content items 105 is analyzed to identify single sequences of content items 105 of, for example, pieces of music, pieces of editorial content, news, advertisements and the like. Using this analysis, the continuous stream of audio broadcasting content 105 is split into tracks of sequences of content items 105. Such content item 105, for example, could be a single song, but could also be a piece of news or other editorial content or advertising spot. Each single spot is matched against the pre-produced spot catalog 186 for identifying the spot 105. In example implementations, this analysis and matching is performed at the end device 170 which holds spot catalog 186 in parallel to playing back the received audio broadcasting content 105. In further example implementations, this analysis is performed by second screen synchronization system 180 on the basis of samples of the received audio broadcasting content 105 recorded by end devices 170 and transmitted to second screen synchronization system 180 via data link 175.In example implementations, besides the primary audio broadcasting content 105 provided by broadcasting source 150, the digital audio broadcasting stream 105 may also additionally comprise metadata in the form of header information that can be exploited from the digital broadcasting stream 105 by complementary content provider 160 to allow for enriching complementary content 110 with interactive functionalities for, for example, buying, voting or rating broadcasted music, editorial content, news items and the like. In example implementations, this stream of metadata as an overlay to audio broadcasting content 105 may also be used to transport back user actions from device 170 via complementary content provider 160 to broadcasting source 150. Tracks of audio content 105 provided with meta information via digital broadcasting stream 105 may also be news items, pieces of editorial content, features, documentaries, advertisements or the like. Any of these content items is analyzed from the continuous audio broadcasting stream 105 to identify single tracks that split the continuous audio stream 105 into signal sequences or spots.

Fourthly, based on having identified a presently received and played back audio broadcast content item 105 either by computer-implemented systems 182 or end device 160, complementary content synchronization system 180 and or end device 170 using application 115extracts from each identified track or radio spot a unique identifier based on calculating reproducible hash tokens using track information of time, frequency and volume level or volume amplitude. In other words, complementary content synchronization system 180 and or end device 170 using application 115 analyzes each identified spot with regard to the audio signal's frequency and volume characteristic over time. Thus, in example implementations, for any or some points in time of an identified track in audio broadcasting stream 105, a (time/frequency/volume) triple is calculated.

In example implementations, when an audio spot 105 is sent from a radio station 150 during broadcasting the planned program according to a 152 media plan, it is as well streamed to second screen synchronization system 180 via data link 165 by the radio station 150 or e.g. its concerning outsourcing partner. The second screen synchronization system 180 hashes the live stream of radio broadcast 105 and matches ist single spots and tracks against the hash-look-up tables of spot catalog 186. If a matching spot 105 is found, complementary content items 110 associated to the identified spot 105 is looked up using complementary content item catalog 187 and a unique spot identifier (spot ID). If complementary content items 110 are mapped or rather associated to the identified spot 105, in example implementations, a complementary content unique identifier is extracted from the respective entry in complementary content item catalog 187 and notified to application 115 operating on mobile devices 170 that are connected via data link 175 to second screen synchronization system 180 to pull the respective complementary content item(s) 110 as identified by the complementary content unique identifier from complementary content provider 160 for in-synch and blended replay 125 on end device 170. Thus, in example implementations, broadcasted audio content 105 may be received via radio frequency from a radio station 150 on a conventional radio receiver 170 and the complementary content 110 is pulled from a mobile application 115 operating on mobile device 170 after notification from second screen synchronization system 180 to be rendered in mobile application 115 on mobile device 170 which may thus be used by user 172 as a second screen to audio broadcast 105 on the radio receiver 170.

Figure 2 provides an example of a three dimensional graphical analysis, a spectrogram of such an identified track 105 showing the frequency/volume characteristic over time of that audio track.

As indicated in Figure 2, from the frequency/volume characteristic over time from each sampled track 105, a list of time/frequency/volume triples is calculated as a list of these triples. In example implementations, this list of time/frequency/volume triples is converted into a list of reproducible hash tokens and the result may be stored in spot catalogs 186 comprising hash lookup tables. In example implementations, these look-up tables may use frequency as a primary key. In some implementations, these look-up tables may addtionally or alternatively use hash values as primary keys. Such lookup hash tables can be used by second screen synchronization system 180 and or end device 170 using application115 to identify a track 105 that has been analyzed with regard to its time/frequency/volume characteristic.

In example implementations, the broadcasting content to be provided by broadcasting source 150 is pre-defined using e.g. tool like a media plan 152 or the like. On the basis of such pre-planning, the plan of to-be broadcasted spots of broadcasting stream 105 is provided via data link 154 to complementary content provider 160. Using content synchronization system 180, complementary content provider 160 creates in this pre-broadcasting phase an individual acoustic fingerprint as a unique identifier for each of the to-be broadcasted spots or tracks. Such spots or tracks may for example be a piece of music, music songs by one or more performers, pieces of editorial content, news items, advertisements and the like. In example implementations, for each of these spots or tracks representing an audio file, reproducible hash tokens are extracted as unique identifier. Using these identifiers, a radio spot catalog 186 is stored in databases 185 which comprise an indexed list of the reproducible hash tokens for searching and identifying a track or spot of audio broadcasting content 105. In some implementations, the contents (i.e. the radio spot & tracks) contained in the radio spot catalog 186 maybe specific for a particular broadcasting source 150.

Here, any track of audio broadcasting 105 comprised in the media plan 152 provided from broadcasting source 150 to complementary content provider 160 via data link 154 is computed to extract reproducible hash tokens for generating unique identifier for each of these spot to build up a catalogue of tracks, or in other terms radio spots that allow to create a lookup table that comprises each of these radio spots or tracks in a hash table. Thereby transforming the time/frequency/volume triples using hash functions allows for creating identifiers for each of the tracks using its unique frequency / volume characteristic. Using these identifiers, a spot catalog 186 of audio broadcasting content items 105 is built that allows identifying tracks of audio broadcasting content 105 for the purpose of synchronizing complementary content 110 on the identified audio broadcasting spot 105.

For calculating the reproducible hash tokens from the time/frequency/volume characteristic of a radio spot or track, the peaks in the spectrogram of each radio spot are used. These peaks are typically robust also when the spectrogram is infected with noise. For identifying such spectrogram peak, the volume amplitude or energy of a frequency / time point is compared with the volume amplitude level of its neighbors in a spectrogram region defined around this point as a center. For setting the suitable parameters, in example implementations a density consideration is used to have the radio spot being covered reasonably uniform with such identified spectrogram peaks along its time line.

Using this analysis, the spectrogram of a radio spot or track is transformed into a two-dimensional set of time / frequency coordinates that identify the spectrogram peaks with the volume amplitude dimension filtered out. For identifying audio broadcasting content 105, this constellation of time / frequency coordinates is matched against constellations of time / frequency coordinates as stored in the spot catalog 186 of databases 185. Patterns of time / frequency coordinates should thus be the same for matching spot or tracks. This at least applies when a proper time offset is determined that allows aligning two time / frequency coordinates maps, i.e. one map taken from the spot catalog 186 and on map analyzed from audio broadcasting content 105, on the time line.

For indexing these time / frequency coordinates, reproducible hashes are computed in which pairs of time / frequency coordinated are related to each other in a combinatory way. Again, starting from a center point in the time / frequency coordinates of a radio spot, an environment around that center point is determined and the center point is sequentially paired with the other time / frequency coordinates in that environment. Each combinatory pair thus is defined as two frequencies and a delta in time, i.e. a relative time difference rather than an absolute time coordinate. From these pairs, reproducible hashes are computed which may be packed into an unsigned integer and associated with a time offset, i.e .the relative time coordinate of the center point. This computation of combinatory hashes is performed against any of the tracks in the radio spot catalog 186 to create an indexed list of hashes with their associated time offsets and an identifier of the corresponding track. In example implementations, this indexed list of hash tokens maybe indexed by frequency coordinates. Alternatively, the indexed list maybe indexed by the value of the hash tokens.

In some implementations, the radio spot catalog 186 maybe build based upon the media plan 152 for this particular broadcasting source. In some implementations, the radio spot catalog 186 may in addition contain tracks that are analyzed for generating the reproducible hash token identifier independent from a particular broadcasting source and / or a particularmedia plan 152. In these example implementations, such additional tracks maybe provided from popular, i.e. frequently used audio tracks like e.g. popular music songs, classic music or the like. For identifying a track or spot of audio broadcasting content 105, the same process of hash token generation is applied to a broadcasted spot of audio broadcasting content 105. The hash token produced from the broadcasted track of audio broadcasting content 105 is then employed for a matching pair search against the hash-token based audio spot catalog 186.

For identifying a radio spot in audio broadcasting stream105, a (short) sample from the received audio broadcasting content 105 is recorded and taken the beginning of receiving the audio broadcasting content 105. The above described computation for generating combinatory hashes is then applied on that sample. In some implementations, this computation is performed by second screen synchronization system 180 after having transferred the sample from end device 170 to second screen synchronization system 180 via data link 175. In some example implementations, the computation may additionally or alternatively be performed by application 115 operating on end device 170. Using this computation, a set of combinatory hashes with the respective time offset associated is processed from the sample of the received audio broadcasting content 105.

Each hash computed from the sample is then subject to a matching pair search on the hash / time offset records of the spot catalog 186. Again, in some implementations, this computation is maybe performed by second screen synchronization system 180 or additionally or alternatively be performed by application 115 operating on end device 170. The found matching pairs of hashes are associated as time pairs (according to the respective associated time offset of the matching hash) according to the track id of the matches identified in the spot catalog 186. A matching track is then identified based on determining a relative time sequence of hashes, i.e. a significant cluster of hashes in the sample that similarly occurs, i.e. occurs with similar relative time offsets in the hash records for the (matching) spot. A statistically significant cluster can be identified by taking into account the linear relation of the matching time pairs, identifying such significant cluster indicates a matching spot. For each track in the spot catalog 186 this process is performed to determine a (most) significant match.

On the basis of the identified audio broadcasting content item's 105 characteristics as retrieved from spot catalog 186, matching complementary content items 110 can be identified that have been previously, i.e. in the pre-broadcasting phse been associated to the identified audio item 105. Such identified, i.e. associated complementary content items 110 may be, for example, additional visual content establishing a second screen 110 to the associated audio broadcasting content 105. In addition or alternatively, interactive application functionality 110 may be associated that allows for enabling the user 172 to interact with application 115 while listening to the associated audio broadcasting content 105 by way of, for example, initiating a buying transaction for the music song 105 or, voting on the specific identified audio track 105 and rating the content listened to. Thus, in example implementations for achieving synchronization, the audio spots 105 contained in media plan 152 are preprocessed to create a spot catalog 186 before or during planning of the audio program 105 to build a spot catalog 186 as described via combinatory hashing. Every spot entry in spot catalog 186 has unique spot identifier (spot ID). Using this unique spot identifier, one or more complementary content items 110 are mapped via complementary content catalogue 187 to according to any spot 105, i.e. an entry in spot catalog 186. In example implementations depending on whether the analysis, matching and identifying has been performed on end device 170 or by second screen synchronization system 180, either end device pulls the identified, matching complementary content item 110 from complementary content provider 160 from in-synch and blended replay 125, and / or second screen synchronization system 180 notifies application 115 to pull the identified, matching complementary content item 110 from complementary content provider 160, and / or complementary content provider 160 pushes the identified, matching complementary content item 110 to application 115 for in-synch and blended replay 125 on end device 170.Thus, second screen synchronization application 115 on device 170 integrates the rendering of audio broadcasting content 105 by, for example, replaying audio broadcasting content 105 and rendering, for example, displaying complementary content 110 on the digital display of a mobile device 170 in a blended and in-synch fashion 125. For example, complementary content provider 116 may store advertisement videos 110 in databases 185. Moreover, each of the advertisement items 110 may be provided with media information that allows for matching a single advertisement item 110 to a single identified audio broadcasting track 105 to match the audio track 105 with a visual complementary content item 110 such that the characteristics of the audio track 105 as stored in the media information may match to the characteristic of the visual complementary content item 110 as stored in complementary content item database 185.

Alternatively or additionally, the analyzing of the received audio broadcasting content 105 may also be performed on the analog radio frequency signal received by via network 155 or may alternatively or additionally be performed based on analyzing the sound of the replay of received audio broadcasting content 105. When using the latter, further filter techniques may be applied that allow for preventing this analysis to be disturbed by interfering sounds of the present environment pf device 170.

Moreover, in example implementations, a time offset may apply in cases where the analysis of the audio broadcasting content 105 is performed on the fly, i.e. while being received and replayed on terminal 170. In example implementations, this time offset maybe reduced down to a time span that remains substantially unnoticed by the user 172. In these cases, the time offset to the beginning of each audio track 105 can well be calculated and thus a quick and robust search results may be achieved by applying a suitable matching pair search over the timeline of audio broadcasting track 105 on the radio spot catalog 186 built up and stored in databases 185. In example implementations, the time offset may however remain at a time span noticeable by the user. For such cases, to bridge this eventually noticeable initial time offset, standard complementary content 180 may be provided and rendered until matched complementary content items 110 are received, e.g. a still image of the logo of the radio station 150 currently being tuned. In further implementations, in the pre-broadcasting phase the broadcasting source 150 maybe provided with a unique audio watermark for any of the spots 105 as planned in media plan 152. Such audio watermark, e.g. an audio signal overlaying the audio of audio spot 105 not noticeable by the humans ear due to its frequency / volume level, may then be broadcasted by broadcasting source 150 at the beginning of each broadcasted audio spot 105. This allows for a substantially instant identifying of the broadcasted spot based on matching the detected audio watermark to the respective spot catalog 186.

As described above, this radio spot catalog 186 comprises hash-look-up tables of radio content tracks 105 that have been previously provided in the pre-broadcasting phase for example by broadcasting sources 150 or other sources. After having received such radio broadcasting items 105 at complementary content provider 160 each of these radio spots 105 is analyzed with regard to its time based frequency/volume characteristics to generate time/frequency/volume triples that are converted using combinatory hashing such that hash lookup tables are generated using frequency or hash values as the primary key. Accordingly, the generated hashes can be used as a unique identifier to identify a respective audio track 105 and to associate any audio track 105 with respective complementary content items 110 as stored in database 185.

Additionally or alternatively, in further implementations, audio water marking is used to identify a specific audio broadcasting track 105. In these implementations, an acoustic water mark is used to enable complementary content synchronization system 180 while analyzing the rendered, i.e. played-back, audio stream 105 to identify any single audio sequence or audio track 105 using a signal that is not audible for a human being due to its frequency and/or volume.

In example implementations, complementary content provider 160 may be active in the development of the media plan 152 of broadcasting source 150. In such cases, any audio track 105 or at least some of the audio tracks 105 comprised in the media plan 152 of audio broadcast station 150 is provided with an acoustic water mark, for example, a frequency pattern of three seconds that may not be audible to a human being but allows for identifying the particular audio track 105 by complementary content synchronization system 180. Using such audio water marking allows for robustly identifying previously prepared audio tracks 105 in a stream of audio broadcasting 105 hence to robustly match the identified audio tracks 105 to the respective radio spot catalog 186 stored in database 185.

In example implementations, various methods apply to support matching of audio broadcasting tracks 105 and complementary content items 110. In example implementations, an audio track 105 may be supplemented with a visual track 110 that is a moving image, a video or the like. In this implementation, device 170 is equipped with a digital display that allows for displaying the complementary content item 110 with its video content via the interface of application 115 in-sync with the broadcasted audio track 105.

The association of a specific audio track 105 and one or more complementary content items 110 may, for example, be performed using manual identification. In this method, a broadcasting source 150 provides a media plan 152 to complementary content provider 160. Using the media plan 152 provided, complementary content provider 160 searches for matching complementary content items, for example, matching advertisements, matching videos, or matching moving or non-moving images. In response to having identified matching images or videos, for example the images or videos of a particular artist performing a particular song to be broadcasted via audio track 105, a manual mapping of the specific audio track 105 and the identified matching complementary content item 110 is created and stored in the look up tables stored in databases 185. Thus, when receiving audio broadcasting content 105, complementary content synchronization system 180 analyses the received audio broadcasting content 105 and when identifying the specific audio track 105 using matching pair search in the radio spot catalog 186, the mapped specific complementary content item 110 is identified that has previously and manually been mapped to the specific now-identified audio track 105. Accordingly, complementary content synchronization system 180 selects the identified mapped complementary content 110 and broadcasts the complementary content item 110 in response to retrieving the complementary content item 110 from databases 185 via network 175 to mobile device 170 such that application 115 can render the complementary broadcast item 110 in-sync with the received audio broadcast track 105 that previously was identified. Thus, in example implementations, the mapping of audio broadcasting track 105 with complementary content item 110 is performed manually based on a previously provided media plan 152 provided in particular by a broadcasting source 150.

Alternatively or additionally in some implementations, this mapping may be performed using a semi-automated method of applying hash algorithms. In this case, using for example a previously provided media plan 152 provided by a broadcasting source 150, audio tracks of audio broadcasting content 105 as well as associated complementary content items 110 may be uploaded to complementary content provider 160 and stored in databases 185. The uploaded audio tracks of audio broadcasting content 105 may then be pre-computed using combinatory hashing to create a hash lookup table for identifying a particular audio track 105 in the stream of audio broadcasting content 105. Accordingly, in these implementations, the currently received and rendered audio broadcasting 105 is analyzed on the fly using combinatory hash analysis to identify and synchronize identified audio tracks 105 with the previously uploaded complementary content items 110. For example, visual advertising elements may be merged within application 115 with audio tracks 105 into a blended rendering 125 of both, audio content 105 and video content 110, such that a synchronized second screen experience 125 is presented to user 172.

Moreover, additionally or alternatively automated audio-video splitting may be applied to create a TV-like experience on mobile device 170 using broadcasted audio tracks 105 and synchronized visual complementary content items 110. In example implementations, broadcasting source 150 and complementary content provider 160 cooperate to jointly produce content items that contain both, audio 105 and video 110 content. In such implementations, the joint content item may for example be produced like a TV-spot that has an audio and a video track. After the joint production of such TV-spot like content item, the audio and video track may be separated to create an adiuo item 105 for broadcasting by broadcasting source 150 and a video item 110 for supplementing to the broadcasted audio item 105 by complementary content provider 160. In example implementations, the separately provided audio 105 and video 110 tracks may be replayed in-synch either on one and the same device 170 or on two different devices 170, one replaying the audio track 105 and the other device 70 replaying the video track 170. Thus, the audio track 105 may be received by a radio receiver 170 and the video trac k110may be received and replayed in-synch on a second, digital device like e.g. a tablet, smartphone and the like. In these implementations, audio and video is simultaneously recorded and produced in the same way as videos and movies are produced. However, after production, audio and video signals are split and synchronized into tracks 105 / 110 using unique identifiers. The video tracks 110 with the identifiers are stored in databases 185 of complementary content provider 160 whereas the respective audio signals 105 are used to create audio broadcasting tracks 105 broadcasted by broadcasting source 150. Accordingly, when broadcasting such audio broadcasting content 105, complementary content system 180 synchronizes from the audio signal of the audio broadcasting content 105 to the respective matching video signal stored in database 185 using previously produced unique identifiers. Based on that, computer systems 182 retrieve identified video content from databases 185 and transmit these identified and retrieved complementary content items 110 via networks 175 to device 170 where application 115 merges the retrieved video signal 110 with the broadcasted audio signal 105 into a seamless audio-video rendering that appears to the end user 172 on device 170 like a seamless movie or video experience.

In example implementations, complementary content synchronization systems 180 takes into account further information in order to identify matching complementary content items 110 that match to audio broadcasting tracks 105. In example implementations, any user 172 of application 115, for example, might be provided with a user profile 188 at complementary content provider 160. Alternatively, such user profiles 188 holding also further data like characteristics of a user's history of activity, features of a user's current geo-context and the like may in example implementations not be exchanged with complementary content provider 160 but instead be held on the end device to account for privacy and data protection considerations.

These user profiles 188 may store meta information on an individual user 172, for example, characteristics with regard to preferences in listening behavior, buying behavior and the like. Moreover, such user profiles may be enriched with demographic information on users 172 and/or further information retrieved from historic activity of user 172 e.g. while interacting with application 115 in processes of voting, buying, greeting, commenting and the like and/or social channel activity of user 172. Moreover, this Information may habe dynamic character by taking into account time and location based considerations for identifying patterns of user behavior and preferences depending of the time of day, the date, the user's GPS location and the like.

Using this information 188 on a user 172, a personalized and dynamic user profile 188 may be generated that allows for individually targeting complementary content items 110 taking into account the characteristics of a particular audio broadcasting content 105, characteristics of the broadcasting source currently been tuned in, characteristics of the particular program currently being broadcasted (e.g. news feature versus quiz show) and additionally taking into account the dynamic characteristics of the individual user's 172 profile 188 stored either at complementary content provider 160 or end device 170. The mentioned elements of an individual, personalized user profile 188, however, are solely of illustrative and exemplary character and thus in several implementations of the second screen system 100, further, additional or alternative elements and characteristics may be stored in such user profiles 188.

In example implementations, the individual user's profile 188 may thus be stored and kept on the respective end device 170. Using these profiles188, second screen synchronization system may provide a service access point per target group for user targeted advertising. For that, user profile data may be collected on end device 170 in profile catalogue 188. Utilizing this user profile catalogue data, an user target group ID may be compiled on device 170 in profile catalogue 188. This compilation may in example implementation be fully executed and computed on end device 170 without any sending of profile data 188 to any data center 180/185 or any other third party 150/160. Thus, privacy considerations are fully respected and any user's privacy is ensured. In example implementations, second screen synchronization system 180 may create service access point mappings that associate a service access point to a respective target group ID. Such service access point mappings may be send to end devices 170. Utilizing received service access point mappings, end device 170 may update its locally stored service access point catalogue with received service access point mappings. Such updated service access point catalogue may be utilized by end device 170 to looks up a matching service access point for user's 172 target group by identifying the user's target group ID within the service access point catalogue. Thereby, the device 170 may be enabled to request advertising content 110 from the identified service access point of the user's 172 respective target group In example implementations, not only dynamic characteristics of the individual user's 172 profile 188 but also characteristics of the broadcasting station 150 may be taken into account. As with individual user 172, also with broadcasting source 150 a user broadcasting source profile 188 may be stored in database 185 and / or at end device 170. Such broadcasting source profiles 188 may take into account characteristics of target groups of broadcasting source 150 at specific dates or times as for example activity, listening, buying and / or other preferences. Moreover, such profiles 188 may store information and preferences of customers of broadcasting source 150, for example, companies broadcasting advertising content 105 via broadcasting sources 150.

Thus, complementary content synchronization system 180 may at any point in time calculate an audio context taking into account one or more of a dynamic individual user's 172 profile 188, and/or the characteristics of the broadcasting source profile 188 of broadcasting sources 150 and the currently rendered audio broadcasting content 105. Besides information from the user profile 188, broadcasting source profile 188, and broadcasting audio content 105, additionally information like the time of day, the specific day or dates, the GPS location of the device 170, the environment the device 170 is currently operated in and the like may be taken into account. However, these additional pieces of information rather serve as illustrative and exemplary examples of such additional pieces of information that may be taken into account when calculating an individual and dynamic audio context. In other implementations additional and/or alternative pieces of information may be used to calculate an audio context. The calculated audio context dynamically characterizes the audio context situation of user 172 at any given point in time.

Accordingly, in example implementations, complementary content synchronization system 180 operates to match complementary content items in a context sensitive and dynamic way such that an individual and dynamically personalized selection or rather targeting of complementary content items 110 may be achieved for an individual user 172 from a complementary content items catalog 187 at any given point in time.

In example implementations, this dynamic targeting may be employed for broadcasting context-sensitive and individually targeted advertisements 110 from complementary content provider 160 to user 172 that may be replayed in-synch with broadcasted radio program 105. For example, while broadcasting an editorial feature on a foreign country 105, e.g New Zealand, using the dynamic and individual targeting, the user may be presented with an offer to buy a holiday journey to New Zealand. This offer may be presented to the user as a complementary video content item 110 and may additionally enable the user via respective application functionality to engage in instantly buying that journey or being transferred to the respective vendor. Thus, context sensitive advertisement 110 may be created that is presented to the user on a second screen of a second device 170 that thereby complements a primary device for receiving the radio broadcast 105. Alternatively, both, i.e. audio content 105 and video content 110 may be rendered in -synch and in a blended fashion on one and the same device 170, e.g. a tablet.

Such context sensitive advertisement 110 may be further individualized to target single individual users 172 in their individual dynamic contexts. Such individual targeting may as individual context take further into account characteristics of the radio station 150 currently tuned (e.g. a classic radio versus a rock music station), profile characteristics of the currently broadcasted program (e.g. business news versus morning show), the individual and dynamic user profile enriched with history data on the user's 172 interaction with application 115 (e.g. user's geo-data as detected by device's 170 GPS sensor, preferences when voting, activities in gaming and the like). Such history data recorded based on the activities and behavior of an individual user 172 may thus enable a behavior-based, individual and dynamic targeting of advertising content 110 provided by complementary content provider 160 to user 172.

Determining that individual and dynamic audio context of a current user 172 may be performed by the application service 160 of second screen synchronization system 180 or maybe performed additionally or alternatively by the application 115 processing on end device 170 that holds a user's profile 188, characteristics of a user's history of activity 188, features of a user's current geo-context and the like without exchanging this data with the application service of complementary content provider 160 to maintain control of the user 172 via the end device 170 and account for privacy and data protection considerations. Accordingly, device 170 with application 115 creates and renders a seamlessly merged audio broadcast content 105 and complementary content item 110 such that this merged combination of audio broadcast 105 and complementary content item 110 may in example implementations be individually and dynamically targeted and unique for the individual user 172 at a specific point in time, thus being different for a different user 172 that may have different characteristics in his or her user profile 188.

In example implementations, thereby are "classic" radio spots may be supplemented with visually complementary moving image content items 110 targeted for being rendered on mobile device 170. Thereby, for example, audio and visually synchronized radio advertisements 110 can be created that are context-sensitively targeted to individual users 172 and/or user target clusters. This generates personalized and higher value as well as additional radio advertisement opportunities for radio broadcasters and marketers.

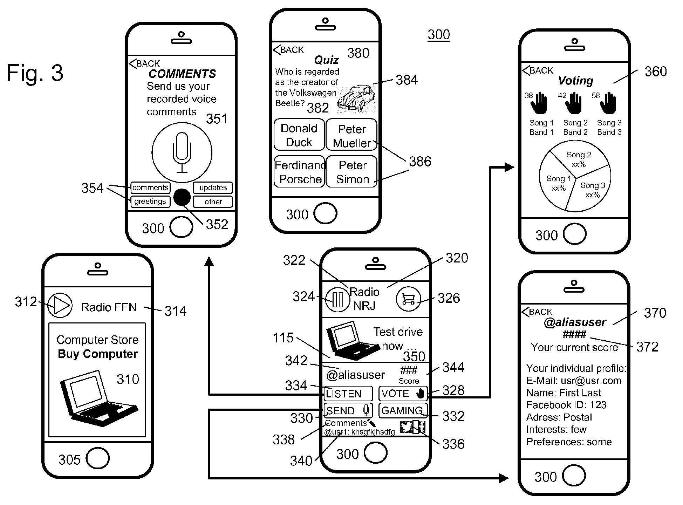

Figure 3 illustrates a mobile device 300 that may be an example implementation of mobile device 170 of Figure 1.

Mobile device 300 runs application 115 that establishes a second screen for audio broadcasting content 105 on mobile device 300. This second screen allows for parallel usage of mobile device 300 supplementing the audio listening experience of user 172. Using this second screen experience on mobile device 300, a new dimension of a media usage is achieved. More particularly, in example implementations, visual complementary content item 110 may be used by user 172 in parallel with audio content broadcasting items 105 via application 115 running on mobile device 300. By this, one-way push transmission from broadcasting sources 150 is transformed into targeted multichannel communication. The targeting is achieved by calculating a current audio context using currently broadcasted audio content track 105 and/or characteristics of an individual users profile 172 and/or characteristics of a current broadcasting sources characteristics 150.

As indicated in the example implementation of application 115 in Figure 3, the complementary content item 110 may provide not only supplementing visual information and / or images, but also may also serve for providing interactive functionalities for listening, voting, gaming or even sending individual contributions of a user 172 to broadcasting source 150. Thereby, the user 172 may get active by actively contributing to the creation of the broadcasting stream 105. Thus, complementary content synchronization system 180 provides new ways of a digital transmission of audio broadcast content 105 which is synchronized with complementary content items 110 to allow for new ways of using traditional radio broadcasting provided by broadcasting sources 150.

More particularly, in some implementations broadcasting sources 150 may provide more targeted way of radio broadcasting 105 that takes into account individual feedback by a user 172 via application 115 such that broadcasting source 150 is able to provide on demand offerings thereby individually targeting and shaping audio broadcast 105 as well as being able to provide complementary content items 110. This interactive exchange with user 172 is moderated by complementary content provider 160 by synchronizing the providing and transmission of complementary content items 110 with the broadcasting of audio broadcast content 105 on the basis of analyzing a current audio context of user 172 active on device 300 via application 115. Accordingly, in some implementations, application 115 on device 300 provides a second screen that complements radio broadcasting content 105.

This supplementing of radio broadcasting 105 by complementary content items 110 can, for example, in some implementations be used to create personalized individually targeted advertising that is adding to the advertising capabilities provided by traditional radio broadcasting content 105. This enables a high value advertising environment provided by application 115 to both, broadcasting sources 150 as well as marketing agencies and advertising companies. To provide that, complementary content provider 160 in example implementations provides a software solution that is present on end device 300 as an application 115. Application 115 in example implementations is operated by user 172 for both listening to audio broadcasting content 105 as well as interacting with and watching complementary content items 110 provided in-sync and rendered in-sync via application 115. In example implementations, in response to analyzing the current audio context of user 172 and end device 300, for example, visual complementary content items 110 are audio-visually synchronized to currently being replayed audio broadcasting content 105.

In example implementations, in response to analyzing the current audio context of user 172 at device 300, matching complementary content, for example visually complementary content items 110 are audio-visually synchronized to the currently being replayed audio broadcast content 105. Thereby, for example, a matching visual advertisement 110 can be blended into audio broadcasting content 105 via application 115 on the basis of the analyzed audio context of user 172. In Fig. 3, device 305 illustrates an example in which the advertisement for a computer device 310 is blended into the current replay of audio broadcasting content 105 indicated by the playback button 312 and the name of the tuned radio station 314.

While the specific implementation of the blending in of advertisements in example device 305 just serves for illustrative and exploratory purpose, this example implementation shows that user application 115 together with broadcasting services 150 may offer the service of positioning context-sensitive affiliate advertisements by interconnecting characteristics of the broadcasting source 150 to characteristics of the currently being played broadcasting media content 105 taking additionally into account individual user profile data 188, characteristics of the currently being replayed audio broadcasting track 105 and the like. Thereby, the currently being replayed audio broadcasting content 105, for example a piece of music, a piece of editorial content, a piece of news or an audio advertisement can be supplemented with a synchronized, for example, visual still or moving image element to create an enhanced and high value advertisement sequence. In example implementations, thereby personalized radio advertisement campaigns can be created that combine the use of classic audio broadcasting spots 105 with user data and interactive response elements like, for example, push messages 110.

This allows broadcasting source 150 to create an interactive radio program that combines audio broadcasting content 105 with complementary content items 110 to create a seamless combined audio-video experience 125 via application 150 for user 172. This, in example implementations, can be used, for example, for a synchronized audio-visual marketing of products and services via individually targeted, personalized radio advertisements that are not only provided by audio signals 105 but further enhanced by synchronized visual content 110.

In addition, application 115 may provide interactive elements and further application options as indicated in example interface 320. Here, besides the name of the tuned in radio station 322, and a playback/pause control 324, further options are provided for buying 326, for example, the current playback music item 105, voting 328 on the current radio broadcast, sending 330 an individual message to the broadcasting source 150, taking advantage of a gaming 332 options, and changing or adjusting radio program preferences 334. Besides, exemplary interface 320 of application 115 provides options to gain direct access to social networks 336, entering text commentaries to the running of broadcasting content 105, as well as reading such text comments 340 of other users. The name of the user profile 342 is displayed as well as a user status, for example, in terms of a user's score 344 that a user may have earned in response to having interacted with the broadcasting source 150. In addition, a fixed area 350 may be provided to show visual content items 110 in relation to the currently being broadcast audio broadcasting content 105, such as, for example, advertisements, information on the current editorial content, further information on the currently being played back artists and the like.

Selecting a control 330 for sending individual messages may enable a user to access interface 351 of application 115, which provides an option to record an individual message that may be sent by user 172 to broadcasting source 150 in response to the currently being broadcasted audio content 105. For that, application 115 in interface 351 provides a record control 352 that starts and ends the recording of the individual message. Moreover, the user may be provided with sub-categories 354 that allow the user to characterize his or her recorded message as being a remark to the current broadcast 105, greetings or commentary to current news 105. Thereby, in example implementations, the user 172 is provided with interactive options 351 that transform the formerly passive listener into an active user that directly communicates via application 115 and complementary content provider 160 with his or her broadcasting source 150 and his or her present of radio broadcast presenter. In some implementations, application 115, for example, as a smart phone application, opens up a channel for direct interactivity between radio creators and radio listeners. This converts listeners into direct users and thereby in some implementation also enables higher value, personalized and individually targeted advertisements. Via complementary content items 110, these advertisements may not only be synchronized with audio broadcast 105 to create a visually amplifying of audio advertisements as part of the audio broadcast 105, but further create a user-targeted program that allows for audio context sensitive additional advertisements provided as complementary content items 110.

Application 115, in some implementations, therefore, provides functionalities for listening to a streamed radio broadcast 105 provided by broadcasting source 150. Illustrated with interface 351, application 115 further may provide options for recording individual sound files, for example individual messages, by a user 172. The user may send these individually recorded messages to the radio broadcast source 150, for example categorized by one of a number of predefined topics 354. In some implementations, radio broadcast sources 150 may predefine such categorizing of topics such as remarks, greetings or comments on ongoing topics and the like.

Moreover, application 115, in some implementations, may provide an option for voting 328. This voting may allow a user 170 to have influence and impact on running media broadcast 105 for example by voting on which of three possible titles will be broadcasted as the next piece of music. Interface 360 shows example implementations of such voting functionality of application 115.

Further, in example implementations, application 115 may offer several mini-gaming options 332 to provide users options for gaming while listening to radio broadcast 105.

Moreover, in example implementations, application 115 may enable a user to create an individual user profile that may be enriched with individual information on the user such as, for example, a name, an alias, one or more social network IDs, age, gender, music preferences and the like. Interface 370 shows example implementations of such an individual user profile that further shows a scoring option 372 that allows a broadcasting source to award scores to a user 172 for having actively contributed to a radio broadcast. Depending on the scores 372, a user ranking may be created that further allows a broadcasting source 150 to create an incentive mechanism for users 172 to actively contribute to radio program 105.

Interface 380 further shows an example implementation where a complementary content item 110 uses the whole interface size of application 115 to display a complementary content item 110 in-sync with audio broadcast 105. Here, in the example of interface 380, a quiz is provided that presents a user with a question 382 regarding a presented visual element 384 and several answering options 386. Thereby broadcasting source 150 is enabled by complementary content provider to create appropriate quiz competitions that are synchronized as complementary content items 110 with radio broadcast 105 to be cross-faded over the entire screen of application 115. While this quiz is blended in, radio broadcast 105 may continue and, for example, advertise the quiz.

By participating in such a quiz or for other forms of active participation, users 172 may score by voting or taking part in quizzes, using the offered gaming options, creating posts, sending commentaries or individually recorded messages or may simply be awarded with scores for active listening at defined times via the digital stream 105 such that any of the individual users 172 can be respected or rewarded as an individual contributor.

Furthermore, options for initiating a purchase in relation to the currently broadcasted audio content 105 may be provided that may lead a user 172 to online shops for buying, for example, currently played music items. Text commentary by users entered either by using the commentary option 338 of application 115 or using social network links 336 may be analyzed and also created by broadcasting source 150 using standardized syntax functions that can associate social network links to an individual user's profile 172 with defined actions like, for example, a user having won a quiz, a user having voted on a specific piece of music, or a user having reached a particular score level and / or providing a link to the respective radio application 115 published by a specific radio station 150.

In example implementations, complementary content provider 160 offers predefined templates that allow broadcasting source 150 to create an individual radio stream application 115 based on customizing the provided, predefined templates with an application design and performing a configuration of application functionality. In example implementations, radio broadcasting source 150 may be provided by complementary content provider 160 with a web front-end application that allows for remote controlling of the individualized application 115 and the various end devices 300. This allows a broadcasting source 150 to create games, to blend sent-in commentaries into current audio broadcasting stream 105, to react to the outcomes of a voting activity, to send personalized advertisements and the like. Thus, in example implementations, complementary content provider 160 prompts a radio application configurator to broadcasting source 150 as well as a campaign manager application to allow a broadcasting source 150 to dynamically adjust an individual audio broadcasting stream 105 supplemented with complementary items 110 to target the blended audio-visual broadcast 125 combined from audio broadcast 105 and visual broadcast 110 to individual users 172 and their individual audio context.

This allows audio broadcast source 150 to create context-sensitive and user individual targeted radio advertisements that blend audio advertisement spots 105 with complementary visual still or moving image items 110 such that this blending is synchronized and remotely managed to be audio context sensitive with respect to the individual audio context of user 172 at device 300. In example implementations, this individual audio context is determined by taking into account the current combination of characteristics of broadcasting source 150 the user 172 is listening to at a given point in time, characteristics of the media profile of the current running radio program 105, characteristics of an individual user profile 188 of user 172 at either broadcasting source 150 and/or complementary content provider 160 as well as the piece of audio broadcast content 105 currently being replayed.

While, for example, advertisements may thus be personalized and sent to end device 300 in an audio-context-sensitive way, the experience of user 172 may be further enhanced by amplifying the impact of a "classical" audio advertisement spot 105 via a synchronized visual amplifying of the advertising message by rendering additional visual elements 110 in sync with broadcasted audio spot 105 on an end device 300. Moreover, complementary content item 110 may even further enable a user 172 to be directly relayed to a point of sale to purchase the item currently being advertised, for example a piece of music, a book or any other item.

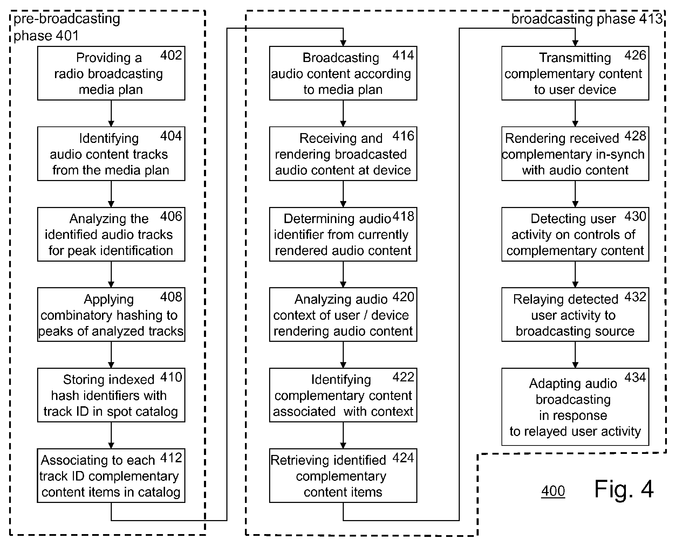

Figure 4 schematically shows an example sequence of a computer-implemented method 400 for dynamic audio-context-sensitive synchronization of complementary broadcasting content for supplementing audio broadcasting.

The pre-broadcasting phase 401 starts in step 402 of method 400, a radio broadcasting media plan 152 is provided from a broadcasting source 150 to complementary content provider 160. Using second screen synchronization system 180, complementary content provider 160 identifies audio content tracks 105 comprised in or rather determined by the media plan 152 in step 404. In step 406, the identified audio tracks are analyzed by second screen synchronization system 180 with regard to their frequency / volume over time characteristic for identifying the frequency / time peak constellation of the audio track 105. On the thereby created frequency / time coordinates, in step 408 combinatory hashing is applied to create an unique audio identifier for the analyzed track 105. These unique identifiers are stored in step 410 for each of the analyzed tracks 105 as indexed hash look-up tables in a spot catalog 186, each record of the spot catalog 186 being supplemented with a unique track ID. To each audio track 105 that has associated thereto an audio identifier and track ID, one or more matching complementary content items 110 are associated. In example implementations, this spot catalog 186 may be stored in local data storages 185 and / or in remote data storage systems 185 accessible by second screen synchronization system 180. The spot catalog 186 may be created by complementary content provider 160, or alternatively by second screen synchronization system 180 or alternatively by broadcasting source, e.g. radio station 150 or by other third parties which by uploading spots 105 and / or spot catalog 186 to second screen synchronization system 180 enable pre-processing uploaded audio spots 105.

In example implementations, during the pre-broadcasting phase, such complementary content items 110 are created for example by complementary content provider 160. Created complementary content items 110, for example still images, videos, movies and the like, may then be stored by the creator (e.g. complementary content provider 160) in data storages 185 which may in some implementations be part of a second screen synchronization system 180 but alternatively or additionally be remote storage systems 185. In example implantations, remote storage systems 185 may thus be accessible by but may not be a local part of second screen synchronization system 180. In such example implementations, a complementary content unique identifier may be extracted from any created complementary content item 110 and stored together with administrative information of the respective complementary content item 110 in data storage 185 as managed by complementary content provider 160.

The associated complementary content items 110 are stored with the unique track ID as a pointer to the matching track 105 in complementary content item catalog 187 in step 412. In example implementations, this association is reflected in campaign catalogues. A campaign catalog is a collection of associations or rather mappings of complementary content items 110 with audio spots or tracks 105. In example implementations, to each track 105 one complementary content item 110 may be mapped. However, to any spot 105 also more than one complementary content item 110 may be matched. In example implementations, the mapping of multiple complementary content items 110 to one track 105 further takes into account individual audio contexts such that to any combination of an audio context including a particular audio track one complementary content item 110 is associated to. In example implementations, these mappings or associations may be created and managed by broadcasting source, e.g. radio station 150, or by complementary content provider 160 or by other third parties such that the mappings are accessible by and operable for second screen synchronization system 180. For example, these mappings may be stored in data storage 185.

The broadcasting phase 413 starts in step 414, the broadcasting source 150 broadcasts audio content 105 according to the previously provided media plan 152 to the user 172 operating end device 170 that executes audio streaming application 115. In step 416, the application 115 executing on device 170 received and renders the broadcasted audio content 105 at the end device 170. While rendering, e.g. replaying the received audio broadcasting content 105, the broadcasted audio content is analyzed in step 418 to determine an audio identifier and based on that the track ID for the currently rendered audio track 105 by applying the same analysis and combinatory hashing than has been applied to the tracks 105 of the media plan 152. Taking into account the determined track ID, the audio context of user 172 / device 170 rendering the broadcasted audio content 105 is determined by taking into account additional Information like e.g. a user'S profile 188 in step 420. In step 422, the calculated audio context is matched against the complementary content item catalog 187 to identify matching complementary content items 110.

Thus, in the broadcasting phase 413, a radio station 150 may send an audio program 105 via radio frequency transmission 155. As part of program 105, at the pre-planned time as e.g. planned in the media plan 152, one of the pre-processed spots 105 is broadcasted. Accordingly, second screen synchronization system 180 identifies the pre-processed spot 105 by applying combinatory hashing to the current stream of radio broadcast 105 from radio station 150 and creating an identifier for the currently send spot 105, The created identifier, e.g. the calculated hash identifier is looked-up in spot catalogue 186 by applying matching pair search. For the identified pre-processed spot 105 in spot catalog 186. the spot ID (unique spot identifier) is retrieved and matched against complementary content item catalog 187 in example implementations by searching for the retrieved spot id in one or more campaign catalogues for identifying complementary content unique identifiers of complementary content items 110 user proassociated with the retrieved spot ID. Using the identified complementary content unique identifier against complementary content item catalog 187, the matching complementary content item 110 may be retrieved and sent to device 170 In response to identifying the currently best matching complementary content item 110 associated with the current context, the matching complementary content item's ID is transmitted to end device 170 to enable application 115 to pull the identified matching complementary content item 110 based on retrieving it in step 424 from databases 185 by second screen synchronization system 180.

In step 426, the requested and retrieved complementary content 110 is transmitted to user device 170 by complementary content provider 160. In step 428, the application 115 renders the received complementary content 110 in-synch with the broadcasted audio content 105 such that the user 172 is presented with a blended replay of audio and complementary content 125.. In example implementations, in response to sending the identified complementary content item, monitoring information may be collected for creating an advertising statistics data warehouse for further reporting and controlling purposes.

For the case of the complementary content being built by application functionality, the broadcasted functionality is rendered via application 115 at end device 170 such that the user is enabled to interact with the provided, i.e. broadcasted application functionality. In response to the user 172 interacting with the rendered functionality, the user's 172 activity on controls of the complementary content functionality is detected in step 430. In step 432, the detected user activity is relayed from application 115 via complementary content provider 160 to broadcasting source 150. Broadcasting source 150, adapts the current audio broadcasting in response to relayed user activity in step 434.

From the forgoing and further it will be appreciated that, although specific embodiments have been described herein for purposes of illustration, various modifications may be made without deviating from the sprit and scope of the present disclosure. For example, the methods, techniques, computer-readable medium, and systems for providing dynamic audio-context-sensitive synchronisation of complementary broadcasting content for supplementing audio broadcasting discussed herein are applicable to other architectures and other system architectures depicted. Also, the methods, techniques, computer program products, and systems discussed herein are applicable to differing protocols, communication media (optical, wireless, cable, etc.) and devices (such as wireless handset, electronic organizers, personal digital assistants, portable email machines, game machines, pagers, navigating devices such as GPS receivers etc.).

**The following is a list of further preferred embodiments of the invention:**
Embodiment 1: A computer-implemented method for providing dynamic audio-context-sensitive synchronisation of complementary broadcasting content for supplementing audio broadcasting, the method comprising:
   providing a user profile (188) comprising characteristics of one of a plurality of users (172) receiving audio broadcast content (105);
   providing a media plan (152) and deriving a spot catalog (186) identifying the audio spots (105) contained in the media plan on the basis of applying combinatory hashing, and associating matching complementary content items to each identified audio spot for building a complementary content item catalog;
   receiving, on a mobile device (170) by one of the plurality of users, an audio broadcasting content (105) from one of a plurality of audio content broadcasting sources (150) and rendering the received audio broadcasting content in sequence to the user via the mobile device;
   determining while rendering the received audio broadcasting content an audio context based on identifying a currently rendered sequence of the received audio broadcasting content in the spot catalog, characteristics of the user's profile (188), and characteristics of the one audio content broadcasting source, wherein the determining comprises dynamically calculating while rendering the received audio broadcasting content combinatory hashes on the currently rendered sequence of audio broadcasting content and / or dynamically recognizing a unique audio content identifier in the currently rendered sequence audio broadcasting content;
   selecting based on the determined audio context a dynamically matching complementary broadcasting content item using the complementary content item catalog, requesting the matched complementary broadcasting content from a database (185) and transmitting the matched complementary broadcasting content to the mobile device; and
   receiving the matched complementary broadcasting content on the mobile device and rendering the received complementary broadcasting content in parallel to the rendering of the received audio broadcasting content such that the complementary broadcasting content is dynamically synchronized to the determined audio context.
Embodiment 2: The method of embodiment 1, wherein the audio broadcasting content is broadcasted as digital stream of audio.
Embodiment 3: The method of any of embodiments 1 or 2, wherein the audio broadcasting content being broadcasted has been analyzed at a complementary content provider (160) with a time-offset to the broadcasting of the audio broadcasting content such that an anticipated audio context of a user is associated with matching complementary broadcasting content before the broadcasting of the respective audio broadcasting content to the user.
Embodiment 4: The method of embodiment 3, wherein the associating comprises:
   creating and storing complementary content items 110;
   extracting a complementary content unique identifier from each respective stored complementary content item;
   creating mappings of complementary content items with audio broadcasting spots (105) by associating one or more complementary content unique identifier with an audio broadcasting spot; and
   storing the mappings in one or more campaign catalogues such that a look-up search for matching complementary content is enabled.
Embodiment 5: The method of any of embodiments 1 to 4, wherein determining an audio context is performed on the basis of a weighted consideration of at least one of a characteristic of the currently rendered sequence (172), information retrieved from the user's profile (188), information retrieved from a broadcasting source's profile (188), a radio program characteristic, a current day and/or time.
Embodiment 6: The method of any of embodiments 1 to 5, wherein the determining of an audio context is computed on the mobile device (170) and the data comprised in and compiled with the user's profile (188) is kept on the mobile device without being sent to device-external data storage.
Embodiment 7: The method of any of embodiments 1 to 6, further comprising building a hash look-up table from calculating a hash function on tracks of provided audio broadcasting content, wherein calculating the hash function comprises creating a list of time/frequency/volume triples, applying the hash function on the triples and storing the result in a look-up table indexed by the respective frequency of the triple.
Embodiment 8: The method of embodiment 7, wherein to each entry of the look-up table one or more matching complementary content items 110 is associated thereto and stored in databases 185.
Embodiment 9: The method of embodiment 8, further comprising:
   utilizing the look-up table using matching pair search for identifying a unique audio spot identifier for the currently rendered audio broadcasting content (105),
   searching the identified unique audio spot identifier in a campaign catalog storing mappings of complementary content items with audio broadcasting spots (105) for determining complementary content unique identifiers of associated complementary content items,
   requesting the associated complementary content items based on the determined complementary content unique identifiers; and
   looking up complementary content 110 by complementary content identifier,
   sending the requested complementary content items to the mobile device for rendering.
Embodiment 10: The method of any of embodiments 1 to 9 wherein a complementary content item (110) may be a visual content, an image, a movie, a video, and/or application functionality to be rendered at user device 170.
Embodiment 11: The method of embodiment 7, wherein a complementary content item is provided as application functionality, the complementary content item being transmitted to the device and rendered on the device to enable the user 172 to engage in interactive activities, the interactive activities being at least one of voting, commenting, buying, and/or recording a personal message and sending the personal message to broadcasting source 150.
Embodiment 12: The method of embodiment 11, wherein the user's activity on the transmitted application functionality is tracked and stored as a user's historic activity profile, wherein the user's historic activity profile is a part of the data being stored in the user's profile (188) on the mobile device.
Embodiment 13: The method of any of embodiments 1 to 12, further comprising:
   providing one or more access points per determined user target group for targeting user related advertising;
   collecting on the mobile device (170) user profile data in a profile catalogue;
   compiling a user target group identifier on the mobile device utilizing data from the user's profile (188) in the profile catalogue on the mobile device;
   receiving a list of service access point mappings comprising mapping of service access points with user target group on the mobile device;
   updating, in response to the receiving, the service access point catalogue stored on the mobile with the received service access point mappings; and
   looking up on the device a matching service access point for the user's target group within the updated service access point catalogue.
Embodiment 14: A computer-readable medium having stored thereon computer-readable instructions that, when run on a computer, are configured for performing the steps of any of the methods of embodiments 1 to 13.
Embodiment 15: A computer-implemented system for providing dynamic audio-context-sensitive synchronisation of complementary broadcasting content for supplementing audio broadcasting, the system comprising:
   one or more databases (185) comprising one or more user profiles (188), each profile (188) comprising characteristics of one of a plurality of users (172) receiving audio broadcast content (105), the databases further comprising a media plan (152) for deriving a spot catalog (186) that identifies the audio spots (105) contained in the media plan on the basis of applying combinatory hashing, and a complementary content item catalog built from associating matching complementary content items to each identified audio spot in the spot catalog;
   one or more mobile devices (170) operated by the one of the plurality of users, the mobile device adapted for receiving an audio broadcasting content (105) from one of a plurality of audio content broadcasting sources (150) and the mobile device further being adapted for rendering the received audio broadcasting content in sequence to the one user;
   a second screen device application (115) being connected to a second screen synchronization system (180), the application comprising means adapted for determining, while rendering the received audio broadcasting content, an audio context based on identifying a currently rendered sequence of the received audio broadcasting content in the spot catalog, characteristics of the user profile, and
   characteristics of the one audio content broadcasting source, wherein the determining comprises dynamically calculating while rendering the received audio broadcasting content combinatory hashes on the currently rendered sequence of audio broadcasting content and/or dynamically recognizing a unique audio content identifier in the currently rendered sequence of audio broadcasting content; and the second screen synchronization system being adapted for selecting based on the determined audio context a dynamically matching complementary broadcasting content item using the complementary content item catalog, retrieving the matched complementary broadcasting content from the one or more databases (185) and transmitting the matched complementary broadcasting content to the mobile device; wherein the application is further adapted for receiving and rendering the matched complementary broadcasting content on the mobile device in parallel to the rendering of the received audio broadcasting content such that the complementary broadcasting content is dynamically synchronized to the determined audio context.

## Claims

1. A computer-implemented method for dynamically targeting complementary content items based on the audio context of an individual user listening to a broadcasting content providing a service access point for user targeted advertising, the method comprising:
storing a dynamic user profile (188) of an individual user of a plurality of users (172) at a complementary content provider (160), the profile containing meta information on the individual user's behavior with regard to broadcasted content (105);
providing an application present on an end device (300) being operated by the single individual user, the application operating for listening to broadcasted content;
broadcasting audio content via an audio background source (150), the broadcasted audio content containing a unique audio content identifier, the audio content identifier overlaying the broadcasted audio content not noticeable by the human ear due to its frequency;
receiving and analyzing via the application the broadcasted audio content (105) to dynamically recognize the unique audio content identifier overlaying the broadcasted audio content;
requesting from the end device a dynamically matching complementary content item (110);
transmitting in response to the requesting a personalized individually targeted complementary content item to the end device to individually target the single individual user by selecting from a complementary content item catalog a dynamically matching complementary content item, the matching taking into account the recognized audio content identifier and characteristics of the single individual user's profile, requesting the matched complementary broadcasting content item from a database (185) and transmitting the matched complementary broadcasting content item to the end device via a network (175); and
receiving the matched complementary content item on the end device and rendering the received complementary content item on the end device.

2. The method of claim 1, wherein broadcasting audio content provides an audio playback of broadcasted content by an audio background source.

3. The method of any of claims 1 or 2, wherein the audio content being broadcasted has been analyzed at a complementary content provider (160) with a time-offset to the broadcasting of the audio content such that individually targeting comprises anticipating an audio context of an individual user and associating said anticipated context with matching complementary broadcasting content items before the broadcasting of the audio content.

4. The method of claim 3, wherein the associating comprises
creating and storing complementary content items 110;
extracting a complementary content unique identifier from each respective stored complementary content item;
create mappings of complementary content items with audio content spots (105) by associating one or more complementary content unique identifier with an audio content spot; and
storing the mappings in one or more campaign catalogues such that a look-up search for targeting complementary content is enabled.

5. The method of any of claims 3 or 4, wherein the audio context is determined on the basis of a weighted consideration of at least one of a characteristic of a currently broadcasted audio content (172), information retrieved from the user profile (188), information retrieved from a profile of the background source (188), and a day and / or time.

6. The method of any of claim 5, wherein an audio context is computed on the mobile device (170) and the data comprised in and compiled with the user profile (188) is kept on the mobile device without being sent to device-external data storage.

7. The method of any of claims 1 to 6, further comprising building a unique audio content identifier look-up table from calculating a hash function on provided audio content to derive the unique audio content identifier, wherein calculating the hash function comprises creating a list of time/frequency/volume triples, applying the hash function on the triples and storing the result in a look-up table indexed by the respective frequency of the triple.

8. The method of claim 7, wherein to each entry of the look-up table one or more matching complementary content items 110 is associated thereto and stored in databases 185.

9. The method of claim 8, wherein requesting and transmitting a matching complementary content item further comprises:
utilizing the look-up table using matching pair search for identifying the recognized unique audio content identifier overlaying the currently broadcasted audio content (105),
searching the recognized unique audio content identifier in a campaign catalog storing mappings of complementary content items with audio content spots (105) for determining complementary content unique identifiers of associated complementary content items,
requesting the associated complementary content items based on the determined complementary content unique identifiers; and
looking up complementary content 110 by complementary content id,
sending via the network the requested complementary content items to the mobile device for rendering.

10. The method of any of claims 1 to 9 wherein a complementary content item (110) may be a visual content, an image, a movie, a video, and / or application functionality to be rendered at user device 170.

11. The method of claim 10, wherein the complementary content item is provided as application functionality, the complementary content item being transmitted to the device via the network (175) and rendered on the device to enable the user 172 to engage in interactive activities, the interactive activities being at least one of voting, commenting, buying, and / or recording a personal message and sending the personal message via the network.

12. The method of claim 11, wherein the user's activity on the transmitted application functionality is tracked and stored as a user's historic activity profile, wherein the user's historic activity profile is a part of the data being stored in the dynamic user profile (188) on the mobile device.

13. The method of any of claims 1 to 12, further comprising
providing one or more access points per determined user target group for targeting user related advertising;
collecting on the mobile device (170) user profile data in a profile catalogue;
compiling a user target group identifier on the mobile device utilizing data from the user's profile (188) in the profile catalogue on the mobile device;
receiving a list of service access point mappings comprising mapping of service access points with user target group on the mobile device;
updating, in response to the receiving, the service access point catalogue stored on the mobile with the received service access point mappings; and
looking up on the device a matching service access point for the user's target group within the updated service access point catalogue.

14. A computer-readable medium having stored thereon computer-readable instructions that, when run on a computer, are configured for performing the steps of any of the methods of claims 1 to 13.

15. A computer-implemented system for providing dynamically targeting complementary content items based on the audio context of an individual user listening to a broadcasting content providing a service access point for user targeted advertising, the system comprising:
one or more databases (185) at a complementary content provider (160) comprising one or more dynamic user profiles (188) of an individual user of a plurality of users (172), the profile containing meta information on the individual user's behavior with regard to broadcasted content (105);
an audio background source (150) broadcasting audio content, the broadcasted audio content containing a unique audio content identifier, the audio content identifier overlaying the broadcasted audio content not noticeable by the human ear due to its frequency;
an application present on an end device (300) being operated by the single individual user, the application operating for listening to broadcasted content, the application further adapted for receiving and analyzing the broadcasted audio content (105) to dynamically recognize the unique audio content identifier overlaying the broadcasted audio content, and the application further being adapted for requesting a dynamically matching complementary content item (110) from the complementary content provider;
means adapted for transmitting from the complementary content provider in response to the request a personalized individually targeted complementary content item to the end device to individually target the single individual user by selecting from a complementary content item catalog a dynamically matching complementary content item, the matching taking into account the recognized audio content identifier and characteristics of the single individual user's profile, retrieving the matched complementary broadcasting content item from a database (185) and transmitting the matched complementary broadcasting content item to the end device via a network (175), wherein the application is further adapted for receiving the matched complementary content item on the end device and rendering the received complementary content item on the end device.
